(19) **Europäisches Patentamt European Patent Office Office européen des brevets**

(11) **EP 3 655 585 B1**

(12) **FASCICULE DE BREVET EUROPEEN**

(45) Date de publication et mention de la délivrance du brevet:
**24.12.2025 Bulletin 2025/52**

(21) Numéro de dépôt: **18752829.4**

(22) Date de dépôt: **20.07.2018**

(51) Classification Internationale des Brevets (IPC):
*E01B 7/10* (2006.01)     *E01B 7/12* (2006.01)
*E01B 11/50* (2006.01)     *B23K 35/30* (2006.01)
*C21D 9/04* (2006.01)

(52) Classification Coopérative des Brevets (CPC):
**C21D 9/04; B23K 35/3053; B23K 35/3066; B23K 35/3073; B23K 35/308;** C21D 2211/008; E01B 7/10; E01B 11/50

(86) Numéro de dépôt international:
**PCT/FR2018/051869**

(87) Numéro de publication internationale:
**WO 2019/016490 (24.01.2019 Gazette 2019/04)**

(54) **ELÉMENT DE GUIDAGE ET DE SUPPORT DE ROULEMENT POUR VÉHICULE FERROVIAIRE**

FÜHRUNGS- UND STÜTZELEMENT FÜR EISENBAHNFAHRZEUG

GUIDE AND ROLLING SUPPORT ELEMENT FOR RAILWAY VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2017 FR 1756903**

(43) Date de publication de la demande:
**27.05.2020 Bulletin 2020/22**

(73) Titulaire: **VOSSLOH Switch Systems France 92500 Rueil-Malmaison (FR)**

(72) Inventeurs:
• **BARRESI, Francesco**
**67000 Strasbourg (FR)**
• **SCHMITT, Sylvain**
**67250 Schoenenbourg (FR)**

(74) Mandataire: **Ipsilon 10, rue Jacques Kablé 67080 Strasbourg Cedex (FR)**

(56) Documents cités:
EP-B1- 0 906 452     WO-A1-2013/190206
WO-A1-2015/182743     FR-A1- 2 864 117

## Description

La présente invention se rapporte au domaine des éléments de guidage et de support de roulement pour véhicule ferroviaire et du soudage de ces éléments entre eux et plus particulièrement au domaine des appareils de voie et du soudage de ceux-ci à des rails.

Dans le domaine ferroviaire, les cœurs de croisement et autres composants de l'appareil de voie doivent supporter des passages répétés de véhicules roulants. Il est donc indispensable que ces éléments atteignent des niveaux de dureté suffisants pour résister aux pressions répétées exercées par les véhicules ferroviaires en déplacement. La publication WO 2015/182743 propose un exemple de composition pour permettre une optimisation de la dureté au niveau de la surface supérieure d'un rail.

Une solution courante pour assurer un niveau de dureté minimal consiste en l'utilisation d'un acier moulé avec une composition de manganèse, ce qui lui confère une structure austénitique. Cet acier manganèse, également appelé acier Hadfield , présente une dureté de 220HB. Après une opération de durcissement par explosion, cet acier peut atteindre une dureté de 320 HB.

Cependant, la mise en œuvre de cette solution aboutit à la réalisation d'éléments de voie dont les passages répétés de véhicules conduisent à la déformation des surfaces circulées. Cette déformation impose une intervention sur site avec un reprofilage des éléments d'appareils de voie pour éviter une dégradation et l'apparition prématurée de fissures. De plus, lors de l'opération de moulage, il peut arriver que des défauts de fonderie surviennent et conduisent à une dégradation des éléments de voie lorsqu'un véhicule, même de faible tonnage, circule dans une zone proche du défaut de fonderie.

Par ailleurs, si cet acier répond aux conditions de dureté des éléments d'appareil de voie, il présente comme inconvénient de ne pas permettre la réalisation de pièces qui soient soudables directement entre elles ou avec des rails associés. En effet, le soudage d'un élément d'appareil de voie en acier Hadfield avec un rail impose l'ajout d'un intercalaire en acier inoxydable pour surmonter le refroidissement lent imposé par l'acier du rail. Le temps de soudage d'une telle jonction entre un appareil de voie et un rail est donc deux fois plus important du fait de la présence indispensable d'un insert intercalaire.

Pour contourner les inconvénients liés à l'acier manganèse, une solution alternative consiste en l'utilisation d'acier laminé trempé à structure martensitique. Cet acier présente comme avantage de permettre la réalisation de pièces dont la dureté est comprise entre 380 HB et 400 HB.

Cependant, la structure martensitique de cet acier se transforme dès 250°C, ce qui, au cours d'opération de préchauffage et de soudage, entraine une dégradation rapide de la dureté originelle de l'acier. Ainsi, une opération de soudage sur un élément d'appareil de voie de cette composition altère la qualité de l'acier et conduit à une usure prématurée de la pièce en utilisation. Par ailleurs, cet acier montre une ductilité et une ténacité faible, ce qui est à l'origine de la propagation rapide de fissures.

La présente invention a pour but de pallier à cet inconvénient en proposant un élément de guidage et de support de roulement pour véhicule ferroviaire en acier dont la composition permet de répondre aux contraintes de dureté imposées par la fonction de cette pièce de support de roulement, tout en autorisant une soudabilité directe et sans pièce d'insert du cœur de croisement avec un second élément sans altération excessive de ses propriétés de dureté.

A cet effet, l'invention a pour objet un élément de guidage et de support de roulement pour véhicule ferroviaire, caractérisé en ce que au moins une portion positionnée dans la partie supérieure de l'élément et réalisant la surface de roulement est réalisée avec un acier dont la composition comprend en complément du Fe :

- $$0,15 \leq C \leq 0,3 \ \%,$$

- $$1 \leq Mn \leq 2 \ \%,$$

- $$0,2 \ \% \leq Ni \leq 1 \ \%,$$

- $$0,5 \leq Cr \leq 2 \ \%,$$

l'acier présentant une structure mixte de martensite revenue et de bainite et d'austénite résiduelle après avoir été traité thermiquement à trempe et à vitesse et durée contrôlée.

L'invention concerne également un procédé d'assemblage d'au moins un élément selon l'invention avec une pièce complémentaire par soudage direct par étincelage comprenant notamment :

- une première étape réalisée par une première phase d'étincelage destinée à augmenter la température des surface à souder de façon homogène, la durée de cette première étape étant comprise entre 15 s et 40 s,
- une seconde étape réalisée par une phase de préchauffage préchauffage par effet Joule des parties à souder, la durée de cette seconde étape étant comprise entre 45 s et 55 s avec une intensité de chauffage comprise entre 55 kA et 70 kA,

- une troisième étape réalisée par une seconde phase d'étincelage pour désoxyder les faces à souder tout en évitant leur re-oxydation, la durée de cette troisième étape étant comprise entre 12 s et 22 s, avec une intensité d'étincelage comprise entre 16 kA et 19 kA et une vitesse d'avance en fin d'étincelage comprise entre 2mm/s et 3mm/s,
- une étape de mise en contact des surfaces à souder.

Une soudure directe d'au moins un élément selon l'invention réalisé intégralement avec un acier d'une composition susmentionnée avec au moins un rail obtenue par un procédé d'assemblage selon l'invention, est caractérisée en ce que la force de rupture F exprimée en kN de la soudure en flexion suivant EN14587-3 est supérieure au produit du module d'inertie $W_{patin}$ au niveau du patin exprimée en cm$^3$ par 4,261 selon la formule :

$$F \geq 4{,}261 \text{ x } W_{patin}$$

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :

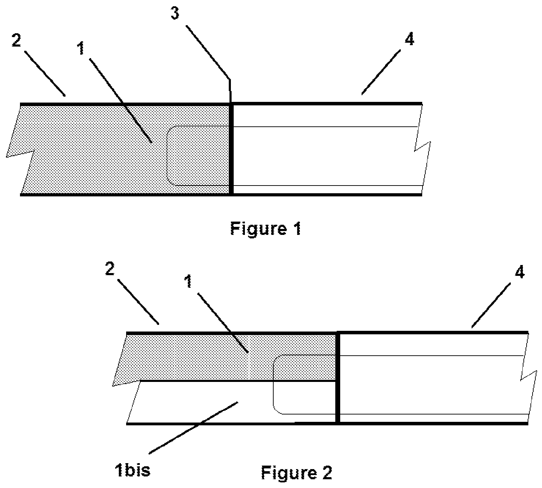

- la figure 1 est une représentation schématique d'un exemple de construction d'un élément de l'invention réalisé par un seul acier de la composition revendiquée,
- la figure 2 est une représentation schématique d'un exemple de construction d'un élément de l'invention réalisé par superposition de deux types d'acier différents.

Il convient de noter que, dans le présent document, l'expression « élément de guidage et de support de roulement pour véhicule ferroviaire » se rapporte aux appareils de voies et rails et, plus particulièrement aux différents composants de ces appareils de voies que sont notamment les cœurs de croisement, les cœurs de traversée, les pointes de cœurs, les aiguilles, les contre-aiguilles et les demi-aiguillages.

L'invention se rapporte à un élément 2 de guidage et de support de roulement pour véhicule ferroviaire, caractérisé en ce que au moins une portion positionnée dans la partie supérieure de l'élément 2 et réalisant la surface de roulement est réalisée avec un acier 1 dont la composition comprend en complément du Fe :

-

$$0{,}15 \leq C \leq 0{,}3 \text{ \%},$$

-

$$1 \leq Mn \leq 2 \text{ \%},$$

-

$$0{,}2 \text{ \%} \leq Ni \leq 1 \text{ \%},$$

-

$$0{,}5 \leq Cr \leq 2 \text{ \%},$$

l'acier 1 présentant une structure mixte de martensite revenue et de bainite et d'austénite résiduelle après avoir été traité thermiquement à trempe et à vitesse et durée contrôlée.

Selon une construction particulière, l'élément 2 de guidage et de support consiste ainsi en une superposition d'au moins deux types d'acier différents 1, 1bis sous la forme d'un « sandwich », de sorte que la portion haute de l'élément soit formée d'un acier 1 de la composition susmentionnée.

Selon une de construction particulière alternative préférentielle, l'élément 2 de l'invention est caractérisé en ce que l'ensemble de l'élément 2 est réalisé avec un acier 1 de la composition susmentionnée.

Pour cette seconde particularité de construction, la construction d'un élément 2 intégralement réalisé avec un acier 1 de cette composition et avec une telle structure permet de profiter des propriétés de haute résistance mécanique de l'acier 1 pour répondre aux contraintes d'usure et d'impacts récurrents supportées par l'appareil de voie, tout en garantissant une soudabilité optimale. Cette optimisation de la soudabilité est notamment caractérisable par différents examens détaillés par la norme EN14587-3, notamment précisés aux paragraphes §10.4.9 et §10.4.10.

Il est ainsi possible de caractériser la résistance de l'élément 2 de guidage et de support de roulement de l'invention grâce à certaines propriétés de l'acier 1 qui sont notamment :

- une limite élastique à 0,2 % de déformation (Rp 0,2 %) qui est supérieure à 1050 MPa,
- une limite à la rupture (Rm) qui est supérieure à 1400 MPa,
- un allongement à la rupture (A %) qui supérieur à 11 %.

Grâce à la faible concentration de carbone par rapport à un acier manganèse et au traitement thermique de l'acier 1 de l'élément 2 de l'invention, la soudabilité de l'élément s'en trouve optimisée. Une concentration de carbone de l'acier 1 comprise entre 0,15 % et 0,3 % permet d'obtenir, d'une part, une dureté de l'acier 1 suffisamment importante et, d'autre part, une bonne aptitude à la soudabilité. La combinaison de ces deux propriétés est difficile à obtenir en raison de concentrations en carbone favorisant ces propriétés qui sont incompatibles.

Selon une propriété particulière, l'élément 2 de l'invention construit avec un tel acier 1 est caractérisé en ce que la dureté en surface est supérieure à 440 HB. Cette dureté initiale en surface présente l'avantage de pouvoir être encore améliorée par écrouissage, par exemple en service, pour augmenter et atteindre une dureté supérieure à 540 HB. Une telle dureté permet ainsi de ralentir la vitesse d'usure de l'appareil de voie en utilisation. La réalisation d'un cœur de croisement avec un tel acier 1 permet également d'écarter les risques de déformation des surfaces circulées en limitant, voire en supprimant, les interventions de reprofilage sur site.

La structure métallurgique composée de martensite revenue, de bainite et d'austénite résiduelle obtenue grâce à la composition chimique en combinaison avec un traitement thermique de trempe à refroidissement contrôlé et un revenu permet la réalisation d'un cœur de croisement résistant à l'usure et dont la surface du matériau est apte à s'écrouir en service.

Selon une particularité de construction, l'élément 2 selon l'invention est caractérisé en ce que la quantité de nickel est inférieure à 0,8 %. De façon préférentielle, la quantité de nickel est de l'ordre de 0,4 %.

Selon une autre particularité de construction, l'élément 2 selon l'invention est caractérisé en ce que la quantité de carbone est supérieure à 0,2 %.

Selon une autre particularité de construction, l'élément 2 selon l'invention est caractérisé en ce que la quantité de manganèse est inférieure à 1,5 %.

Selon une autre particularité de construction, l'élément 2 selon l'invention est caractérisé en ce que la quantité de chrome est inférieure à 1,5 %.

Selon une particularité de construction, l'élément 2 selon l'invention présente une hauteur comprise entre 80 mm et 200 mm. L'acier 1 utilisé dans le cadre de l'élément 2 de l'invention permet la réalisation d'une pièce dont l'épaisseur est de l'ordre de 200 mm sans que ses propriétés de résistance et de dureté s'en trouvent altérées. Cette propriété autorise ainsi la construction d'éléments 2 avec une variabilité importante en terme d'épaisseur, tout en conservant une homogénéité de sa dureté et de sa soudabilité directe.

L'invention porte également sur un procédé d'assemblage d'au moins un élément 2 selon l'invention avec une pièce complémentaire 4 par soudage direct par étincelage comprenant notamment :

- une première étape réalisée par une première phase d'étincelage destinée à augmenter la température des surface à souder de façon homogène, la durée de cette première étape étant comprise entre 15 s et 40 s,
- une seconde étape réalisée par une phase de préchauffage par effet Joule des parties à souder, la durée de cette seconde étape étant comprise entre 45 s et 55 s avec une intensité de chauffage comprise entre 55 kA et 70 kA,
- une troisième étape réalisée par une seconde phase d'étincelage pour désoxyder les faces à souder tout en évitant leur re-oxydation, la durée de cette troisième étape étant comprise entre 12 s et 22 s, avec une intensité d'étincelage comprise entre 16 kA et 19 kA,
- une étape de mise en contact des surfaces à souder.

Selon une particularité de mise en œuvre du procédé de l'invention, la première phase d'étincelage est préférentiellement effectuée pendant une durée supérieure à 30 s. Une telle durée permet de garantir une uniformité et une homogénéité de la température sur la section de l'élément 2 de l'invention à souder.

Selon une autre particularité complémentaire de mise en œuvre du procédé de l'invention, la phase de préchauffage est opérée avec une intensité de l'ordre de 60 kA de telle sorte que les caractéristiques de l'acier 1 ne soient pas affectées de manière excessive. Ainsi, bien que lors de ce préchauffage la dureté de l'élément 2 présente des variations dans la zone affectée thermiquement, il convient de noter que dans cette zone, la dureté moyenne est de l'ordre de 370 HB.

Selon une autre particularité de mise en œuvre, le procédé d'assemblage selon l'invention est caractérisé en ce que, en fin de seconde phase d'étincelage, la vitesse d'avance est comprise entre 2 mm/s et 3 mm/s.

Selon une spécificité de cette particularité complémentaire de mise en œuvre du procédé de l'invention, la vitesse d'avance de la seconde phase d'étincelage demeure suffisamment lente pour éviter tout court-circuit en étant préférentiellement comprise entre 2 mm/s et 2,8 mm/s.

Il convient de comprendre que dans le cadre d'une installation sur site, la pièce complémentaire 4 est généralement réalisée par une portion de rail destinée à être positionnée dans le prolongement d'un appareil de voie.

Une soudure 3 directe d'un élément 2 est réalisé intégralement avec un acier 1 d'une composition susmentionnée avec au moins un rail 4, obtenue par un procédé d'assemblage selon l'invention. Cette soudure 3 directe, c'est-à-dire sans insert, obtenue par le procédé de l'invention est caractérisée en ce que la force de rupture F exprimée en kN de la soudure 3 en flexion suivant EN14587-3 est supérieure au produit du module d'inertie $W_{patin}$ au niveau du patin exprimée en cm$^3$ par 4,261 selon la formule :

$$F \geq 4{,}261 \text{ x } W_{patin}$$

Cette force de rupture en flexion est mesurée dans le cadre d'un test réalisé selon la norme EN14587-3, détaillé au paragraphe §10.4.7 et dans son annexe B, après soudage d'un élément 2 de l'invention avec un rail 4.

Selon une particularité de cette soudure 3 directe, la force de rupture est supérieure à 1 600 kN pour une section de rail 4 de profil 60E1 dont le module d'inertie W en patin est égal à 375,5cm$^3$. A titre de comparaison, la soudure d'un rail identique à un cœur de croisement en acier manganèse à structure austénitique classiquement réalisée ne permet de garantir qu'une force de rupture en flexion de l'ordre de 850 kN pour ce même profil de rail.

Par ailleurs, il convient de noter que la résistance obtenue par une soudure 3 directe de l'invention entre un élément 2 selon l'invention réalisé intégralement avec un acier d'une composition susmentionnée et un rail 4 correspond aux résistances classiquement obtenues dans le cadre d'une soudure entre deux rails 4 d'une voie courante.

Selon une particularité complémentaire de cette soudure 3 directe, la résistance en fatigue suivant la méthode « tout ou rien » sans rupture est d'au moins 5 millions de cycles de passages avec une contrainte de 21 à 210 MPa. Cette résistance en fatigue est mesurée dans le cadre d'un test réalisé selon la norme EN14587-3, détaillé au paragraphe §10.4.8 et dans son annexe D. A titre de comparaison, la soudure à un cœur de croisement en acier manganèse à structure austénitique classiquement réalisée présente une résistance sans rupture à 5 millions de cycles de passages avec une contrainte de seulement 14 à 144 MPa.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention telle que définie par les revendications.

**Revendications**

1. Elément (2) de guidage et de support de roulement pour véhicule ferroviaire, **caractérisé en ce que** au moins une portion positionnée dans la partie supérieure de l'élément et réalisant la surface de roulement est réalisée avec un acier (1) dont la composition comprend en complément du Fe :

   -

$$0,15 \leq C \leq 0,3 \%,$$

   -

$$1 \leq Mn \leq 2 \%,$$

   -

$$0,2 \% \leq Ni \leq 1 \%,$$

   -

$$0,5 \leq Cr \leq 2 \%,$$

   l'acier (1) présentant une structure mixte de martensite revenue et de bainite et d'austénite résiduelle après avoir été traité thermiquement à trempe et à vitesse et durée contrôlée.

2. Elément (2) selon la revendication 1, **caractérisé en ce que** l'ensemble de l'élément est réalisé avec un acier (1) de la composition selon la revendication 1.

3. Elément (2) selon une des revendications 1 ou 2, **caractérisé en ce que** la quantité de nickel de la composition de l'acier est de l'ordre de 0,4 %.

4. Elément (2) selon une des revendications précédentes, **caractérisé en ce que** la dureté en surface est supérieure à 440 HB.

5. Elément (2) selon une des revendications 1 à 4, **caractérisé en ce que** l'élément présente une hauteur comprise entre 80 mm et 200mm.

6. Procédé d'assemblage d'au moins un élément (2) selon une des revendications 1 à 5 avec une pièce complémentaire (4) par soudage direct par étincelage comprenant notamment :

   - une première étape réalisée par une première phase d'étincelage destinée à augmenter la température des surface à souder de façon homogène, la durée de cette première étape étant comprise entre 15 s et 40 s,
   - une seconde étape réalisée par une phase de préchauffage par effet Joule des parties à souder, la durée de cette seconde étape étant comprise entre 45 s et 55 s avec une intensité de chauffage comprise entre 55 kA et 70 kA,
   - une troisième étape réalisé par une seconde phase d'étincelage pour désoxyder les faces à souder tout en évitant leur re-oxydation, la durée de cette troisième étape étant comprise entre 12 s et 22 s et avec une intensité d'étincelage comprise entre 16 kA et 19 kA,
   - une étape de mise en contact des surfaces à souder.

7. Procédé d'assemblage selon la revendication 6, **caractérisé en ce que**, en fin de seconde phase d'étincelage, la vitesse d'avance est comprise entre 2 mm/s et 3 mm/s.

8. Ensemble **caractérisé en ce que** l'ensemble est formé par au moins un élément (2) selon une des revendications 2 à 5 assemblé à un rail (4).

## Patentansprüche

1. Führungs- und Stützelement (2) für ein Eisenbahnfahrzeug, **dadurch gekennzeichnet, dass** mindestens ein Abschnitt, der im oberen Teil des Elements positioniert ist und die Lauffläche ausführt , mit einem Stahl (1) ausgeführt ist, dessen Zusammensetzung ergänzend zum Fe umfasst:

   -

   $$0{,}15 \leq C \leq 0{,}3 \%,$$

   -

   $$1 \leq Mn \leq 2 \%,$$

   -

   $$0{,}2 \% \leq Ni \leq 1 \%,$$

   -

   $$0{,}5 \leq Cr \leq 2 \%,$$

   wobei der Stahl (1) ein gemischtes Gefüge aus angelassenem Martensit und Bainit und Restaustenit aufweist, nachdem er mit Abschreckhärtung und mit kontrollierter Geschwindigkeit und Dauer thermisch behandelt worden ist.

2. Element (2) nach Anspruch 1, **dadurch gekennzeichnet, dass** das gesamte Element mit einem Stahl (1) mit der Zusammensetzung nach Anspruch 1 ausgeführt ist.

3. Element (2) nach einem der Ansprüche 1 oder 2, **dadurch gekennzeichnet, dass** die Nickelmenge der Zusammensetzung des Stahls in der Größenordnung von 0,4 % liegt.

4. Element (2) nach einem der vorhergehenden Ansprüche, **dadurch gekennzeichnet, dass** die Oberflächenhärte mehr als 440 HB beträgt.

5. Element (2) nach einem der Ansprüche 1 bis 4, **dadurch gekennzeichnet, dass** das Element eine Höhe zwischen 80 mm und 200 mm aufweist.

6. Verfahren zum Fügen mindestens eines Elements (2) nach einem der Ansprüche 1 bis 5 mit einem komplementären Teil (4) durch Abbrennstumpfschweißen, umfassend insbesondere:

   - einen ersten Schritt, der durch eine erste Flash-Phase ausgeführt wird, die dazu bestimmt ist, die Temperatur der zu schweißenden Flächen gleichmäßig zu erhöhen, wobei die Dauer dieses ersten Schritts zwischen 15 s und 40 s beträgt,
   - einen zweiten Schritt, der durch eine Phase des Vorwärmens durch Joule-Effekt der zu schweißenden Teile ausgeführt wird, wobei die Dauer dieses zweiten Schritt zwischen 45 s und 55 s beträgt, mit einer Heizintensität zwischen 55 kA und 70 kA ,
   - einen dritten Schritt, der durch eine zweite Flash-Phase ausgeführt wird, um die zu schweißenden Flächen zu deoxidieren und dabei ihre Reoxidation zu vermeiden, wobei die Dauer dieses dritten Schritts zwischen 12 s und 22 s beträgt, und mit einer Flash-Intensität zwischen 16 kA und 19 kA,
   - einen Schritt des Inkontaktbringens der zu schweißenden Flächen.

7. Verfahren zum Fügen nach Anspruch 6, **dadurch gekennzeichnet, dass** am Ende der zweiten Flash-Phase die Vorschubgeschwindigkeit zwischen 2 mm/s und 3 mm/s beträgt.

8. Anordnung, **dadurch gekennzeichnet, dass** die Anordnung durch mindestens ein Element (2) nach einem der Ansprüche 2 bis 5 gebildet wird, das an eine Schiene (4) gefügt ist.

## Claims

1. Rolling support and guide element (2) for a railway vehicle, **characterized in that** at least a portion positioned in the upper part of the element and forming the rolling surface is produced with a steel (1), the composition of which comprises, in addition to Fe:

   -

   $$0.15 \leq C \leq 0.3\%,$$

   -

   $$1 \leq Mn \leq 2\%,$$

   -

   $$0.2 \% \leq Ni \leq 1\%,$$

   -

   $$0.5 \leq Cr \leq 2\%,$$

the steel (1) having a mixed structure of tempered martensite and residual austenite and bainite after having been heat treated with quenching and at controlled rate and duration.

2. Element (2) according to Claim 1, **characterized in that** the whole of the element is made with a steel (1) of the composition according to Claim 1.

3. Element (2) according to either of Claims 1 and 2, **characterized in that** the quantity of nickel in the composition of the steel is of the order of 0.4%.

4. Element (2) according to one of the preceding claims, **characterized in that** the surface hardness is greater than 440 HB.

5. Element (2) according to one of Claims 1 to 4, **characterized in that** the element has a height of between 80 mm and 200 mm.

6. Method for assembling at least one element (2) according to one of Claims 1 to 5 with a complementary piece (4) by direct flash welding, comprising in particular:

- a first step carried out by a first flashing phase intended to increase the temperature of the surfaces to be welded in a homogeneous manner, the duration of this first step being between 15 s and 40 s,
- a second step carried out by a phase of preheating by Joule effect of the parts to be welded, the duration of this second step being between 45 s and 55 s with a heating current of between 55 kA and 70 kA,
- a third step carried out by a second flashing phase to deoxidize the faces to be welded while avoiding their re-oxidation, the duration of this third step being between 12 s and 22 s and with a flashing current of between 16 kA and 19 kA,
- a step of bringing the surfaces to be welded into contact.

7. Assembly method according to Claim 6, **characterized in that**, at the end of the second flashing phase, the speed of advance is between 2 mm/s and 3 mm/s.

8. Assembly, **characterized in that** the assembly is formed by at least one element (2) according to one of Claims 2 to 5 assembled to a rail (4).

**Figure 1**

**Figure 2**

## RÉFÉRENCES CITÉES DANS LA DESCRIPTION

**Documents brevets cités dans la description**

- WO 2015182743 A